# EUROPEAN PATENT APPLICATION

(11) **EP 2 690 514 A2**
(43) Date of publication of application: **29.01.2014**
(21) Application number: 13177738.5
(22) Date of filing: 24.07.2013
(51) Int. Cl.: G05B 19/409

(54) **User interface with integrated dead man switch**

(30) Priority: 25.07.2012 IT TV20120138
(71) Applicant: ISIS Srl, 31038 Paese (TV) (IT)
(72) Inventor: Paccagnan, Diego, 31100 Treviso (IT)
(74) Representative: Dragotti, Gianfranco

(57) **Abstract**

A method for providing a user graphical interface on a portable computerized control device (13) for industrial installations comprises the steps of providing on the touch screen (15) an image of an interface which comprises graphical control elements (20) which can be activated by the touch of the user and providing on the graphical screen in the vicinity of the lateral edge of the screen at least one icon (21) for enabling the interface. Such an icon is translatable between a rest position and an activation position by means of touch and dragging by the user on the touch screen and automatically returns from the enabling position into the rest position upon release of the touch thereon. In this way the interface is enabled for as long as the user keeps the enabling icon in the enabling position.

## Description

The present invention relates to a method for controlling and activating a user interface. More particularly, the present invention relates to such a method used in portable devices with a touch screen display for controlling industrial installations. Here "industrial installations" is understood as meaning also operating machines and plants for carrying out industrial processes. The invention also relates to an industrial installation with a portable wireless control device.

Usually, automatic industrial installations are controlled by programmable logic controller (PLC) systems. The production and maintenance operators interact with the automated system by means of PC-based graphic interfaces (HMI). The PCs are typically contained inside protective cabinets and positioned centrally with respect to the controlled process.

Portable devices with sufficient calculation power and an intuitive graphical interface are widespread in many applications for daily use (telephones, reproduction of multimedia content, electronic diaries), but are not yet used in an industrial environment.

In the art for some time user interfaces which use touch-screen displays have been known. These interfaces result in a more intuitive controlling action, owing to the simple activation of the various control zones of the interface. A light pressure exerted with a finger by the user on a control zone or icon of the interface is generally sufficient to cause activation of the associated command.

In some application environments and with certain types of devices, this simple control action may constitute a disadvantage. For example, in the case of industrial machine or process control, the risk of unintentional activation of commands in some cases is a deterrent for using touch-screen interfaces. Furthermore, in the case where the control device is a portable device the risk of entering commands owing to inadvertent touching of the touch screen (for example due to the user simply gripping the device) makes these interfaces totally unusable.

Applications, based for example on an iOS or Android platform, which allow remote control of PCs by means of portable wireless devices using touch-screen displays, exist on the market. It would be of interest, therefore, to use these applications in order to control PCs on which HMI applications operate and therefore control a machine or a production installation.

These known applications, however, do not deal with the problem of safe use of the installation and are therefore not considered suitable for use in an industrial environment. In particular, they do not deal with the problem of unintentional activation of devices.

US 2007/150842 discloses a device with a touch sensitive display which may be unlocked by sliding a finger on the display. Once the unlocking action has been completed, the interface is enabled at least for some time. Such a safety method is useful for a cell phone or similar device but it is completely insufficient for a safe use of installations in industrial environment.

EP 0.909.616 and EP 1.582.956 disclose control panels for robots in which hardware deadman switches are attached to the front or rear portion of the device.

A general object of the present invention is to provide a method for activating and controlling a touch-screen user interface which allows safe use of such an interface in an industrial environment. Further objects of the invention relate to providing a user interface, a device for controlling an industrial installation and an industrial installation with safe activation functions.

In view of these objects the idea has occurred to devise, according to the invention, a method for providing a user graphical interface which can be activated on a portable computerized control device for industrial installations, said device comprising a graphical touch screen, a CPU and a memory, said method comprising the steps of: providing on the touch screen an image of a user interface which comprises graphical control elements which can be activated by the touch of the user; providing on the graphical screen in the proximity of the lateral edge of the screen at least one interface enabling icon, said icon have a steady rest position, being translatable between the rest position and an interface enabling position by touch and dragging by the user on the touch screen and with automatic return from the enabling position into the rest position upon release of the touching pressure thereon; enabling the user interface when the user moves and keeps with the touch said icon in the enabling position; and disabling the user interface when the icon is or moves into the rest position.

Still in view of the objects of the invention the idea has also occurred to provide a user graphical interface which can be activated on a portable computerized control device for industrial installations, said device comprising a graphical touch screen, a CPU and a memory, said interface comprising graphical control elements which can be activated by the touch of the user on the touch screen and at least one icon situated on the touch screen and in the proximity of the lateral edge of the screen, said icon have a steady rest position, being translatable between the rest position and an interface enabling position by touch and dragging by the user on the touch screen and with automatic return from the enabling position into the rest position upon release of the touch thereon.

Finally, it has been thought to provide a portable control device and an installation with such a device, in accordance with that claimed.

In order to illustrate more clearly the innovative principles of the present invention and its advantages compared to the prior art, an example of embodiment applying these principles will be described below, with the aid of the accompanying drawings. In the drawings:
- Figure 1 shows a schematic view of an industrial installation according to the invention;
- Figure 2 shows a schematic view of a portable control device according to the invention for an industrial installation;
- Figures 3 to 6 show schematic views of a user interface of the control device according to the invention during various operating steps;
- Figures 7 to 9 show schematic views of the user interface of the control device in an enabled operating condition for entering commands;

Figure 10 shows a possible further feature of the interface according to the invention.

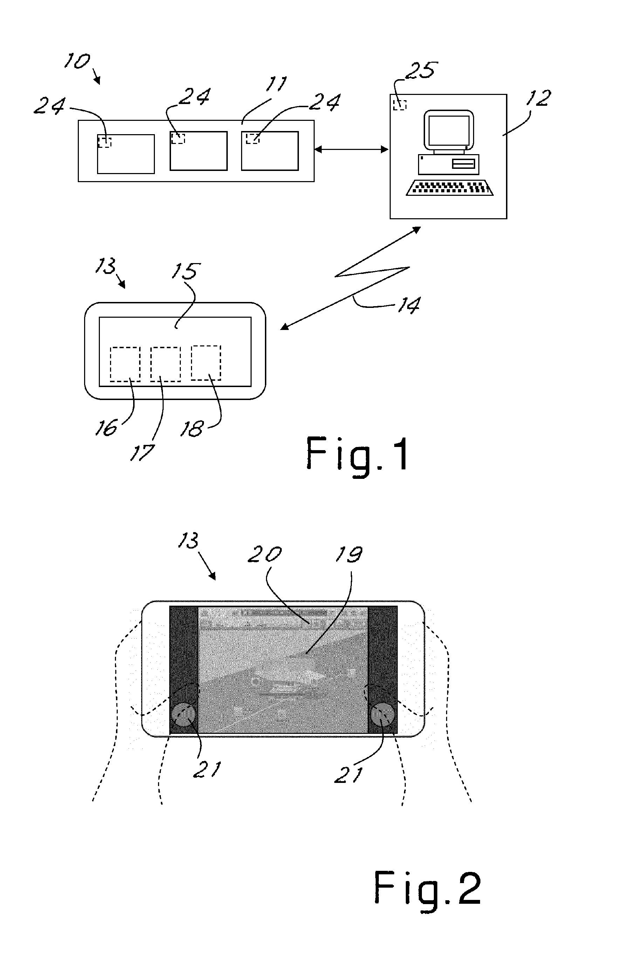

With reference to the figures, Figure 1 shows in schematic form an industrial installation - denoted overall by 10 - which may comprise operating units 11 for carrying out industrial machining operations, production and/or processes. The nature of these operating units may be varied, being substantially of any type known per se. For example, the various operating units may be connected together in sequence so as to be interdependent and carry out as a whole the intended function of the installation (painting, machining, chemical production, etc.).

The installation comprises a control unit 12, known per se, for managing operation - which is usually automatic - of the installation. This control unit may comprise or be formed by one or more personal computers which are interconnected in a network and suitably programmed, assisted, where necessary, by known PLCs. The personal computers are typically contained inside protection cabinets and positioned centrally with respect to the controlled installation.

The installation also comprises a remote control and operating unit in the form of a portable computerized control device 13 connected via a wireless communications channel 14 to the control unit 12.

The portable device 13 in turn comprises a graphical touch screen 15, a CPU 16 and a memory 17. The CPU may be advantageously programmed by means of a suitable program entered into the memory 17 so as to perform the functions provided and implement the method and the interface as explained below.

Advantageously, the device 13 may also comprise a detector 18 for detecting the geographical coordinates of its position with respect to the various operating parts of the plant. This detector 18 may be provided, for example, with a GPS system and/or comprise a system for detecting the relative position with respect to the units of the installation by means of suitable known emitting units and/or position sensors 24 arranged in the vicinity of the various units or zones 11 of the installation and detected and/or in communication with the detector 18. Alternatively or in addition, there may also be provided one or more global position referencing units 25 to which the detector 18 refers in order to determine its absolute position with respect to the installation, substantially providing in the local environment a GPS triangulation system based on units 25 in communication with the transmitting and/receiving detector 18. By knowing the layout of the installation the portable device is thus able to determine its own relative position with respect to the various parts of the installation.

A position detection system is in any case known per se and will not be described or shown further here, being able to be easily imagined by the person skilled in the art on the basis of the present description.

The detector 18 may advantageously comprise a known orientation detector (for example an electronic compass and/or an inertial system) and the spatial coordinates detected may thus comprise also information about the spatial orientation of the device.

As can be clearly seen in Figure 2, the device 13 may be advantageously designed with a horizontally elongated form and be intended to be gripped by the user with both hands, as shown schematically in broken lines.

As can be clearly seen in Figure 2, the device 13 shows on the touch screen an image 19 of a user interface which comprises a plurality of graphical control elements 20 which can be activated by the user's touch. The graphical elements may be of any type useful for controlling and operating the installation by means of the device. They may comprise for example graphical images of installation parts and/or machines with associated icons for interaction between the user and these parts and machines. For example, the controls may comprise controls for setting operation of the installation and/or controls useful for maintenance such that the user may form part the personnel responsible for managing the installation and/or form part of the personnel responsible for carrying out maintenance. Two or more devices 13 with a different interface and controls depending on the user for whom they are intended may also be provided.

The device 13 comprises on the graphical screen in the proximity of the lateral edge of the screen at least one interface enabling icon 21.

In particular, as will be clarified below, the icons 21 are advantageously two in number, being arranged in the vicinity of opposite right-hand and left-hand edges of the screen, respectively, so as to be each manoeuvrable with one of the two thumbs of the user when holding the device with both hands.

The icon has a first steady rest position (shown for example in Figure 2) and is translatable between the rest position and a position for enabling the interface by means of touch and dragging by the user on the touch screen.

Advantageously, the translating movement of the icon from the rest position to the enabling position is vertical and, preferably, from the bottom upwards. Preferably, the rest position is close to the bottom edge of the screen and the enabling position is close to the top edge of the screen.

The exact amount of the translatory movement of the icon may depend also on the dimensions of the screen and its orientation. Basically, the departure point and arrival point of the displaceable icon may be advantageously chosen so as to be easily reached by the thumb while gripping the device, without having to move one's hand.

In the case of devices with relatively small dimensions (for example about 3.5 to 5 inches, preferably of the horizontal wide-screen type) these two positions may be in reality close to the bottom and top edges of the screen. In the case of larger size devices (for example with screens of about 9-11 inches, preferably of the horizontal wide-screen type), the departure position will be advantageously close to where the thumb of the hand gripping the device is situated and the arrival position at a point which corresponds to the maximum height which can be reached by the thumb without moving the hand. The departure and arrival points may also be configured depending on the requirements and/or preferences of the user, for example so as to adapt the travel of the releasing icons to the size of the user's hand.

While movement of the icon from the rest position into the enabling position is manual, the opposite movement is automatic, such that the icon returns automatically from the enabling position into the rest upon release of the touch thereon. In the case of two enabling icons, advantageously each icon causes simultaneously the movement of the other icon so that the user may move both icons by operating only one of them and, if required, change the hand operating them.

When the icon 21 is in the rest position, the interface 19 is disabled and any touching of the interface controls on the touch screen will not activate these controls.

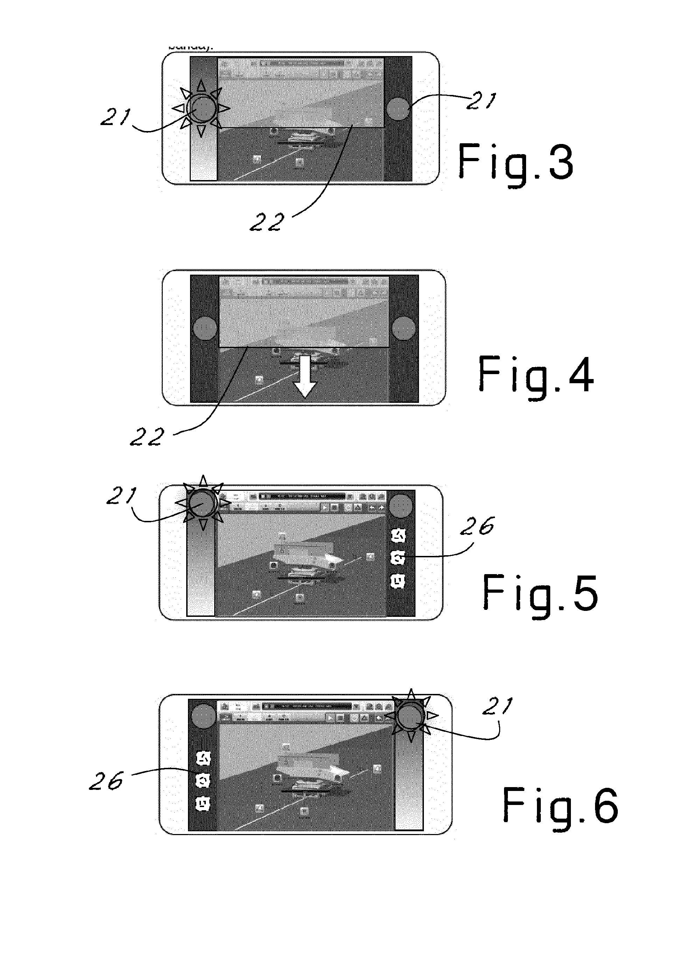

The user interface is instead enabled when the user moves and keeps the icon 2 in the enabling position by means of touch pressure. Figure 3 shows by way of example operation of the left-hand icon. For the sake of clarity the finger which performs the movement is not shown and is replaced by a star-like symbol schematically indicating activation of the icon.

Advantageously, as can be clearly seen in Figure 3, the interface image also comprises a picture wipe effect which moves on the screen together with the enabling icon so as to uncover the graphical control elements upon movement of the enabling icon from the rest position into the enabling position. Still advantageously, the picture wipe is semi-transparent such that the controls of the user interface are always displayed even if they appear "dimmed" when disabled (picture wipe pulled down on the interface) so as to give a clear indication as the enabled or disabled state of the interface.

If the distance travelled by the icon or icons is not the same as that of any picture wipe present, so as to uncover the interface completely, a proportional relative movement of the icon and wipe is possible for example, such that the ends of the icon travel movement will correspond to the start and the finish of the wipe movement so that the interface is completely covered or uncovered.

Figure 4 shows release of the icon with the consequent movement of the icon (and the wipe, when present) back into the rest position, so as to disable the user interface when the icon is or moves into the rest position.

Figure 5 shows on the other hand the icon (and any wipe) moved completely into the enabling position. In this position, the entire interface is enabled and may accept commands caused by touching the sensitive surface of the screen. Advantageously, when the icon is completely in the enabling position, the picture wipe is completely removed, so as to have the entire height of the screen available for the control interface.

Figure 6 shows the situation where the right-hand icon is pressed instead of the left-hand icon so that the interface is kept enabled while changing, however, the hand used for activation. Advantageously, a small delay (for example 2 seconds) may be envisaged before complete release of the icons (namely interruption of the touching pressure on them) is detected and the icons are automatically displaced by the device back into the rest position. In this way, momentary release or not completely synchronized transfer of the touching pressure from one icon to another does not inconveniently disable the interface.

When the device 13 is connected by mean of a wireless transmission to the control unit 12 of the industrial installation, it may be advantageously envisaged that the parts of the installation controlled by the user by means of the portable device 13 are automatically disabled when the said enabling icon is or moves into the said rest position.

In this way, when the user releases the icon 2 for activating command recognition, the devices of the installation controlled by the user via the portable device are set to a safe condition; for example any motors are switched off and moving parts are stopped. This may be useful for example during maintenance operations.

In addition or alternatively, when the position of the device is located by means of the detector 18, only the devices controlled by means of the device and situated in the vicinity of the device 13 and therefore in the vicinity of the user are set to the safe condition. This overcomes any safety problems which may arise from the user mobility associated with use of a portable wireless device.

In other words, when the portable device is provided with a spatial coordinates detector, the method according to the invention may comprise the further steps of detecting the spatial coordinates of the device and disabling parts of the installation situated within a predetermined distance from the spatial coordinates detected when the said enabling icon is or moves into the said rest position. This distance may be determined as being safe for the user, also depending on the parts close to which the user is positioned and, essentially, the danger which they pose.

In the case of installation parts (or operating appliances) where contact with the user must be avoided owing to the risk for the safety of the user (for example presses or other particularly dangerous moving parts) it may be envisaged that operation of these parts is activated only when pressing both icons using both hands. As soon as no pressure is applied by one hand, the appliance will be set to the safety condition, namely switched off.

According to this operating mode, essentially the spatial coordinates of the device are detected by means of the detector 18 and, if the two enabling icons are not in the said enabling position and are not simultaneously touched by the user, installation zones which are situated within a predetermined (potentially dangerous) distance from the spatial coordinates detected will be disabled. The actual distance will depend on the type of moving part and its radius of action considered to be dangerous.

The interface according to the invention may comprise a further advantageous feature when it is in the enabled state. In fact, owing to the need to keep preferably two side zones free for vertical displacement of the two enabling icons, the central image of the control interface may be reduced to the point of making it difficult to operate in a precise and safe manner the graphical control elements which can be touch-activated, these control elements being in turn be advantageously formed as small icons. This may be a problem in particular in the case of a large number of graphical control elements situated within the same interface screen.

In view of the dimensions of the screen compared to the area which may be touch-selected, the user has difficulty in distinguishing between devices situated close to each other without using enlargement of the screen area. This may be performed by means of known pinch-and-zoom functions. The negative aspect of using a pinch-and-zoom function is that part of the control area is no longer displayed.

In order to solve the problem associated with the activation modes of the displaceable icons, the method for managing the interface according to the invention comprises advantageously the further feature that the duration of the touch performed by the user on the contact point of the touch screen is detected and, when the enabling icon is in the enabling position, an enlarged interface zone is displayed in the vicinity of this point if the touch duration detected is longer than a predetermined time interval (for example 3 seconds).

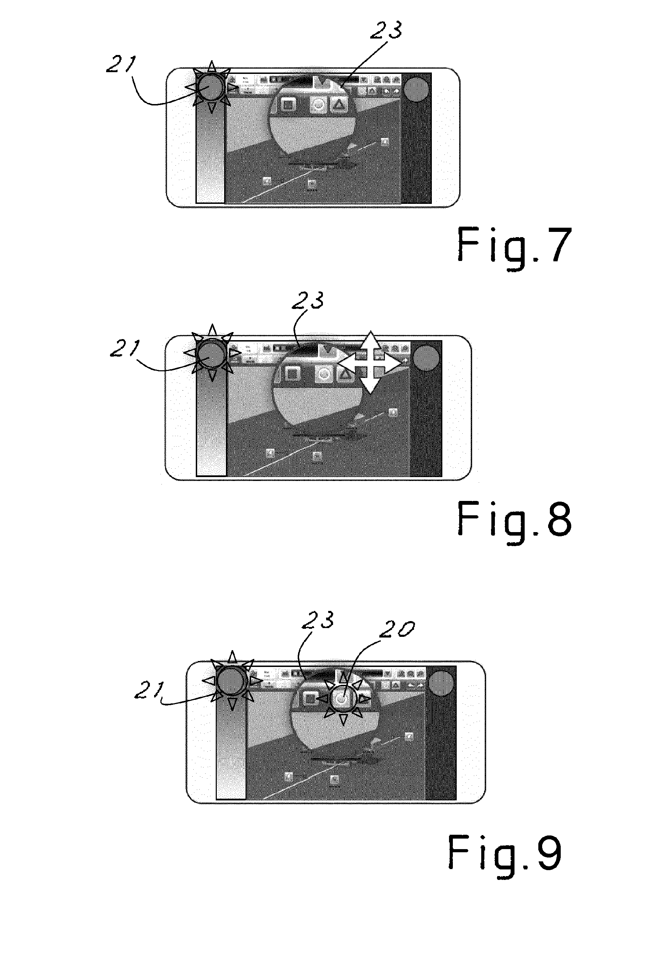

Such a situation is shown, for example, in Figure 7. The enlarged zone advantageously appears as a circular magnifying lens on the interface. The control elements present within the lens can be activated even when enlarged. It is thus possible to activate by means of touch pressure more precisely and more reliably the control elements which are present on the interface.

This mode of operation is more advantageous than the use of normal pinch-and-zoom functions which are usually used with touch-screen interfaces, since the latter functions are useful for users who are trying to identify the devices of interest to them within the screen, while expert users (such as those who generally use and operate industrial installations) already know where the device or control of interest to them is situated and merely wish to enlarge it in order to make the detail more visible or in order to operate with precision the corresponding device or function. In this case, the enlargement system according to the present invention is more advantageous and faster.

Advantageously, the enlarged zone is reset to its non-enlarged size only after a second predetermined time interval (for example 3 seconds) has lapsed from the end of the touching contact which caused enlargement. This advantageously allows one to perform enlargement, release the enlarging touch and activate the control within the enlarged zone before the enlarged zone disappears (as shown schematically in Figure 9). The system may detect the duration of the touch and the double touch in order to distinguish the enlarging touch from the control touch.

Again advantageously, the interface zone which is enlarged may be moved with a movement of the contact point by the user, dragging it on the interface, as schematically shown in Figure 8. Advantageously the edge of the lens may be always kept within the edge of the screen.

When the portable device is equipped with a spatial coordinates detector 18 it may also be envisaged performing the further step of detecting the spatial coordinates of the device and displaying on the interface the graphical control elements, selecting them, depending on the coordinates detected, from a group of graphical control elements present in the device memory. In this way, the screen display changes automatically depending on the installation zone near which the user with the device 13 is situated or moves, thereby providing a contextual interface. As a result it is possible, for example, to reduce the number of controls which are simultaneously displayed and/or the complexity of navigation on the interface.

Advantageously, when the device also comprises an orientation detector, the spatial coordinates detected may also comprise device orientation information so that only that which of interest to the user looking at an installation zone is displayed.

The conventional applications for displaying the installation generally consist of various pages through which the user may flick in order to find the area which is to be controlled.

Owing to the solution described above, the device 13 may instead for example show the area of the installation and/or the associated controls which correspond to the centre of the user's visual range at that moment, based on the position and orientation of the user at that moment and using suitable heuristics which at this point may be easily imagined by the person skilled in the art.

At this point it is clear how the predefined objects have been achieved.

The portable device has essentially two operating modes in relation to recognition of the user commands: active mode and non-active mode. The device recognizes the user's commands entered on the interface when in active mode, but does not accept them in non-active mode.

The user may advantageously use the device in a horizontal position, with both hands. In order to set active mode, the user's thumb moves along the entire height of the screen the special icon which is displayed as or together with a semi-transparent picture wipe (moving upwards in the preferred instance). The device then remains active until the thumb is raised (by means of suitable known heuristics it is possible to detect separation of the thumb from the screen for a significant amount of time). When the thumb is raised, the picture wipe moves back down (with a kind of spring return action) and detection of the commands is deactivated.

Owing to the system according to the invention, if the operator/maintenance engineer has with him/her the interface for interaction with the installation, the operator may monitor the production process where necessary (and not from distant consoles as generally occurs in the prior art). Moreover the operator/engineer may immediately manage anomalous situations, without the need to reach the HMI.

In the presence of a conventional HMI the operator who is situated opposite the process or installation and must solve a problem needs time in order to reach the HMI from where the command must be sent.

On the other hand, the operator who situated at a conventional HMI, in order to respond quickly to an anomalous situation, cannot see the process or installation or therefore cannot always take effective action.

When the position of the conventional HMI is not suitable for viewing the process and the necessary reaction times must be very rapid compared to the transfer times, a portable interface according to the invention therefore improves the production quality and reduces the number of rejects.

Another advantage arising from use of a portable device according to the invention consists in the lower purchase price and maintenance costs.

Moreover, since the system according to the invention avoids the risk of unintentional activation of the portable device, this portable device may be used extensively without causing either material damage during production or harm to persons working in the production premises.

Owing to the principles of the invention the installation may be made safe when the user is in an unauthorized area.

Obviously, the above description of an embodiment applying the innovative principles of the present invention is provided by way of example of these innovative principles and must therefore not be regarded as limiting the scope of the rights claimed herein.

For example the image used for the interface and the appearance of the enabling icon or icons may be of any kind depending on the specific requirements or wishes of the design engineer. Moreover, the installation and the form of the control device may also be of any nature. If desired, the control device may also comprise further physical devices (such as keyboards, trackballs, etc.) for entering commands.

The interface enabling system according to the invention may also be realized implementing the method using suitable software applications (for example based on an iOS or Android platform), these being installed in generic portable touch-screen devices, both replacing conventional HMI as the interface for new installations, and converting/supplementing already existing conventional HMI with portable HMI, without the need to develop new control software for the installation.

Further advantageously interface features can be implemented owing to the main solution claimed herewith.

For example, it is found advantageously when the activation of the interface by means of a vertical dragging of an enabling icon on a screen side occurs, icons for input of commands that are desired to be readably enableable, appear or be however present on a lateral strip of the opposite side of the screen. In this way, when for example the portable device is hold with two hands at the opposite lateral sides, it is possible to operate the enabling icon with the thumb of a hand and rapidly to activate with the thumb of the other hand the commands of the input icons displaced on the other side. All this is particularly useful for example to actuate emergency commands or commands that requires a particularly rapid activation from a person using the device.

In particular, in the case of enabling icons on the two opposite sides of the screen it is found advantageous that the activation of one of the two enabling icons towards the enabling position, the input icons automatically appear on the moving strip of the other enabling icon (eventually after the passage of the other enabling icon, if it is provided that the movement of one of the two enabling icons drags the other one).

Although the above description renders it easy imaginable, this is shown for example in dotted line in 26 on figures 5 and 6. By comparing the figures a possible movement of the icons from the right strip to the left strip of the screen when the change hand that enables the screen can be seen.

The user does not necessarily remove a hand from the device for enabling the icons with the index finger of this hand while with the other hand holds the device and contemporarily bring lifted with the thumb the enabling icon. The icons on the edge can also reproduce icons that appear also in other positions of the screen or icons attainable in other positions of the screen in menu or interface windows sublevels. The command icons can also substitute to the enabling icon not utilized, if the change of the hand is not provided.

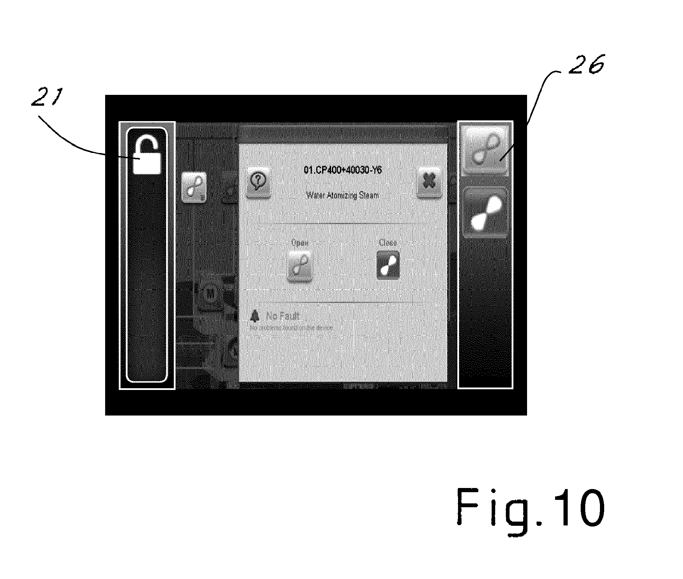

Even if above description render it easily imaginable, all that it is shown in figure 10 where with 21 it is showed to the left the enabling icon on the raised position and with 26 two command icons that appear to the left and that repeat the command icons present in a window that it is showed on the screen.

## Claims

1. Method for providing a user graphical interface which can be activated on a portable computerized control device (13) for industrial installations, said device (13) comprising a graphical touch screen (15), a CPU (16) and a memory (17), said method comprising the steps of:
- providing on the touch screen (15) an image of a user interface that comprises graphical control elements which can be activated by the touch of the user;
- providing on the graphical screen (15) in the proximity of the lateral edge of the screen at least one interface enabling icon (21), said icon having a steady rest position, being translatable between the rest position and an interface enabling position by touch and dragging by the user on the touch screen (15) and with automatic return from the enabling position into the rest position upon release of the touch thereon;
- enabling the user interface when the user moves and keeps with the touch said icon (21) in the enabling position; and
- disabling the user interface when the icon (21) is or moves into the rest position.

2. Method according to claim 1, wherein said translation movement from the rest position to the enabling position is vertical and, preferably, from bottom to top.

3. Method according to claim 1, wherein said interface image comprises a picture wipe effect which moves on the screen (15) together with said enabling icon (21) so as to uncover the graphical control elements upon movement of the enabling icon from the rest position to the enabling position.

4. Method according to claim 3, wherein the picture wipe is semi-transparent.

5. Method according to claim 2, wherein the enabling icons (21) are two in number, arranged in the proximity of opposite right-hand and left-hand edges of the screen (15), respectively, so as to be each manoeuvrable by one of the two thumbs of the user holding the device with both hands, each icon (21) dragging the other icon during movement.

6. Method according to claim 1, wherein the portable device (13) is connected by means of wireless transmission to a control unit (12) of the industrial installation and the method comprises the further step of disabling installation parts controlled by the user by means of the portable device (13) when said enabling icon is or moves into the rest position.

7. Method according to claim 1, wherein the portable device (13) is provided with a detector (18) of spatial coordinates and the method comprises the further steps of detecting the spatial coordinates of the device (13) and disabling parts of the installations situated within a predetermined distance from the spatial coordinates detected when the said enabling icon (21) is or moves into said rest position.

8. Method according to claim 5, wherein the portable device (13) is provided with a detector of spatial coordinates (18) and the method comprises the further steps of detecting the spatial coordinates of the device (13) and disabling installation parts situated within a predetermined distance from the spatial coordinates detected when the two enabling icons (21) are not in the said enabling position and are not simultaneously touched by the user.

9. Method according to claim 1, wherein the duration of the touch by the user on a contact point of the touch screen (15) is detected and, when the enabling icon (21) is in the enabling position, an enlarged interface zone is displayed in the proximity of such point when the detected touch duration exceeds a first predetermined time.

10. Method according to claim 9, wherein after enlargement, the enlarged zone is reset to its non-enlarged size after a second predetermined time has lapsed from the end of the touch which caused the enlargement.

11. Method according to claim 9, wherein, after enlargement, the interface zone which is enlarged is moved together with a movement of the contact point by the user.

12. Method according to claim 1, wherein the portable device (13) is provided with a detector (18) of spatial coordinates and the method comprises the further steps of detecting the spatial coordinates of the device (13) and displaying the graphical control elements by selecting them, depending on the detected coordinates, from a group of graphical control elements present in the device memory (17).

13. Method according to claims 7, 8 or 12, wherein the device (13) comprises an orientation detector (18) and the said spatial coordinates comprise device orientation information.

14. Method according to claim 1, wherein when the activation of the interface by means of translation of an enabling icon along a first lateral edge of the screen occurs, commands enabling icons are made to appear along a second lateral edge of the screen, opposite to said first edge.

15. A user graphical interface which can be activated on a portable computerized control device (13) for industrial installations, said device (13) comprising a graphical touch screen (15), a CPU (16) and a memory (17), said interface comprising graphical control elements which can be activated by a touch of the user on the touch screen (15) and at least one icon (21) on the touch screen and in the proximity of the lateral edge of the screen, said icon (21) having a steady rest position, being translatable between the rest position and an interface activation position by means of touch and drag by the user on the touch screen and with automatic return from the enabling position into the rest position upon release of the touch thereon.

16. Interface according to claim 15, **characterized in that** said translation movement from the rest position to the enabling position is vertical and, preferably, from bottom to top.

17. Interface according to claim 15, **characterized in that** said interface image comprises a picture wipe effect which moves on the screen (15) together with said enabling icon (21) so as to uncover the graphical control elements upon movement of the enabling icon from the rest position to the enabling position.

18. Interface according to claim 16, **characterized in that** the enabling icons (21) are two in number, arranged in the proximity of opposite right-hand and left-hand edges of the screen (15), respectively, so as to be each manoeuvrable by one of the two thumbs of the user holding the device with both hands, each icon (21) dragging the other icon during movement.

19. Interface according to claim 15, **characterized in that** when the activation of the interface by means of movement of an enabling icon along a first lateral edge of the screen occurs, icons for activating commands appear along a second lateral edge opposite to said first edge.

20. Portable computerized device (13) for controlling industrial processes or installations comprising the method and/or the interface according to any one of the preceding claims.

21. Industrial installation comprising a control unit (12) and a portable computerized control device (13) connected via a wireless communication channel to the control unit, the portable computerized device (13) comprising the method and/or the interface according to any one of the preceding claims.
